# EUROPEAN PATENT SPECIFICATION

(11) **EP 2 208 980 B1**
(45) Date of publication and mention of the grant of the patent: **17.04.2019**
(21) Application number: 09000711.3
(22) Date of filing: 20.01.2009
(51) Int. Cl.: G01M 3/00

(54) **Device and method for the automatized monitoring of leakage in plastic containers**
VERFAHREN ZUR AUTOMATISIERTEN ÜBERWACHUNG VON LECKS IN KUNSTSTOFFBEHÄLTNISSEN.
Dispositif et procédé de contrôle automatique des fuites dans des récipients en plastique

(43) Date of publication of application: 21.07.2010
(73) Proprietor: REYDE, S.A., 08820 El Prat de LLobregat Barcelona (ES)
(72) Inventor: De Lamo Navarro, Carlos, E-08820 El Prat De Llobregat (Barcelona) (ES)
(74) Representative: Canela Giménez, Teresa

(56) References cited:
- JP-A- 7 120 345
- JP-A- 61 148 338
- US-A- 4 686 850

## Description

### FIELD OF THE INVENTION

The present invention describes a device and a method for the monitoring of leakage in plastic containers, particularly in large sized containers having a lower valve for discharging the content thereof, through the use of automatized container conveying means in the circuit of the device and the computerized detection of air leakage by means of the images obtained by video cameras operating in an air leakage verification tank.

### PRIOR ART

Plastic containers, and particularly large sized containers, have manifold purposes and are used to supply the materials contained therein. In order to fulfill their function plastic containers must be provided with an outlet valve that is usually placed at the lower portion thereof for facilitating discharging of the liquids accumulated therein.

For simplification purposes, the manufacturing process of these containers has evolved from an initial stage in which the plastic container is manufactured and a later stage in which the plastic container is provided with the outlet valve, there being a plurality of procedures for performing this addition. This variety of procedures has to deal with the need for a solid, economical and easily manufactured joining and, finally must ensure watertightness of the joining. The main object of the present invention is the verification of said watertightness during the manufacturing process of said containers.

Heretofore, the leakage verification process has consisted in the immersion of the containers in previously pressurized tanks containing water and the visual searching for any possible bubbles indicating the existence of leakages. This procedure, as part of a plastic container assembly line, has the inconvenience that detection of bubbles by the operators is defective, it only being effective provided that the number and size of the bubbles is considerable.

US4686850, for example, discloses a method of visual inspection of gushing bubble verification in the manufacture of steel drums in a multiple drum inspection unit. Another of the inconveniences that the present invention intends to deal with is a consequence of the manual operation of this process that does not allow optimization through an assembly line production process of plastic containers.

JPH-07120345 D1 describes a leak tester for faucet fittings and the like, including detection of gushing air with a video camera via process imaging data. But since it is a general description of the steps required for leak detection it does not provide adequate information that can be used for big-sized plastic containers.

This and other advantages of the present invention will become apparent in the description of same that follows.

### BRIEF DESCRIPTION OF THE INVENTION

The present invention develops a device and method for monitoring leakage in plastic containers, particularly in large sized containers having suitable means for conveyance of the containers towards the different areas of the device, for lifting and lowering the containers, thereby permitting smooth introduction and extraction thereof in a tank containing liquid.

This device is provided with means for pressurizing, to a predetermined pressure, the containers and pressure-detecting means of said containers.

There is provided at least one video camera, with the suitable software, that determines whether or not there are air bubbles around the container placed in the tank.

There are also provided monitoring means for controlling the entire operation of the device consisting of a control screen and a CPU that houses the logic, computation and storing operative units permitting an operator to parametrize the functioning of the device and verify the evolution of the activity thereof.

The device of the invention has security means such as electronic barriers, security and emergency push buttons as well as combined function activation push buttons. The containers, depending on the result of the watertightness verification of the present invention, are conveyed to a suitable area to move on to the next process in the assembly line or to an area reserved for defective containers.

### BRIEF EXPLANATION OF THE DRAWINGS

For a better understanding of the invention the present specification is accompanied by sheets of drawings with a merely illustrative and non-limiting purpose of the invention.
Figure 1 illustrates an elevation view of the device of the invention in its preferred embodiment, in which some of its components are shown in a simplified fashion.
Figure 2 illustrates an elevation view of the car, suction cup frame and container gripping suction cups, according to said preferred embodiment of the previous figure.
Figure 3 illustrates an elevation view of the wheel assembly of the conveying car according to the embodiment of the previous figures.
Figure 4 illustrates a simplified elevation view of the verification stage of the device according to the embodiment of the previous figures.

### DETAILED EXPLANATION OF THE INVENTION

The present invention consists of a device (1) and a method for monitoring leakage in plastic containers (2), particularly in large-sized containers having a lower valve for discharging the content thereof, through the use of automatized means for conveyance of the containers in the circuit of the device as well as for the lifting and lowering thereof, and means for the computerized detection of air leakage thanks to the images obtained by video cameras (18) operating in an air leakage verification tank (5).

The present specification basically describes the preferred embodiment of the invention although logically the invention is not limited to said embodiment and can have other configurations all within the essence of the invention in other possible embodiments.

The device of the invention (1) is intended for its integration in a plastic container assembly line (2), so that in the physical space occupied by the device of the invention (1) there exists an area reserved for the entry (19) of the containers coming from other manufacturing stages and an exit area (21) to move the containers verified as satisfactory on to the subsequent stages, while another entry area can be reserved for the containers deemed defective.

The structure (3) of the device requires sufficient stability for optimal functioning. To that end it is provided with damping anchoring means (4) that prevent transmission of vibrations during operation of the machine and independent leveling means.

It is used both electric and pneumatic energy. The pneumatic equipment comprises a maintenance unit, a security pressure switch and bistable electrovalves provided with standing closed centers.

The device features two types of displacements, horizontal displacements for conveying containers between the three stages and vertical (upward and downward) displacements during the actual stage of verification of the container watertightness.

The device is provided with a mechanic structure of the machine assembly or frame (3) and a group or groups of tractors for actuating the mobile parts of the device. In this particular embodiment said structure takes the form of an assembled unit that is thus mounted as a unit or assembly in an assembly line with no need for intermediate mounting. Users merely have to supply the air, water and power connections for completing installation by coupling the inputs and outputs with the other stages of the container production process.

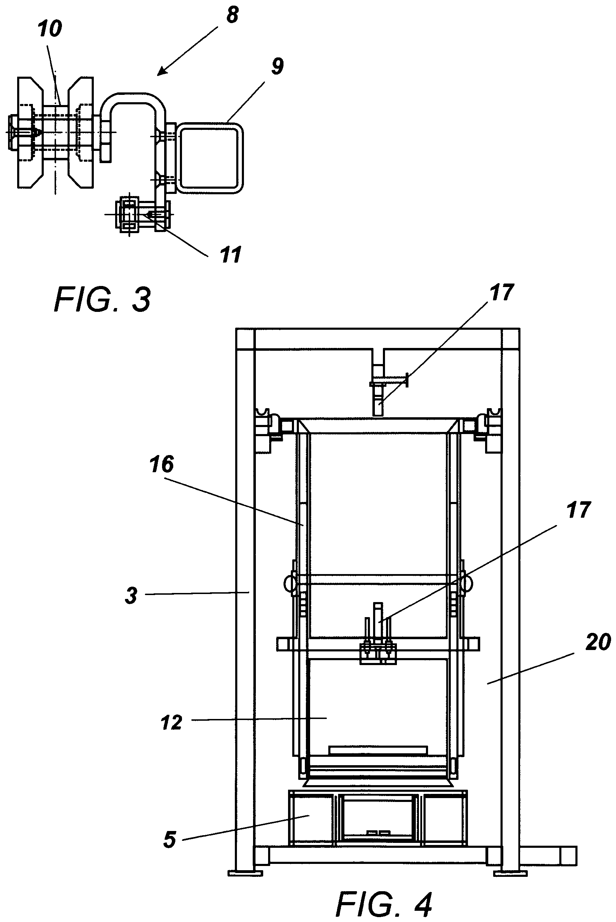

Horizontal conveyance of the reservoir or container between said three stages described above is carried out by means of a mobile car (6) that moves along two parallel prismatic guides (7). The wheel assembly (8) of said car (6) is provided for ensuring stability and preventing possible elevations off the treadway. Wheel assemblies (8) are formed by an assembly having flat wheels (9) on the one hand, and "V"-shaped guiding wheels (10) on the other hand, as shown in Figure 3. Each wheel has a tread set (11) lying at the lower section of the path that keeps the wheel from lifting off said path.

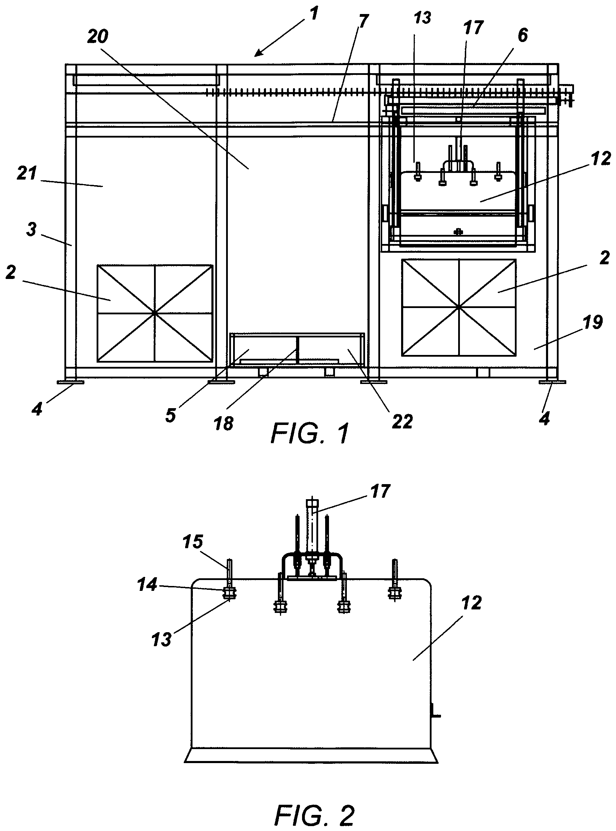

Said mobile car (6) supports a frame (12) that incorporates reservoir fastening elements, which in this preferred embodiment take the form of suction cups (13), that adhere to the container (2), there also existing pressure regulators. Figure 2 shows said frame (12) bearing the suction cups (13), which have a bellows (14) and a telescopic body (15).

Movement of the car (6) is actuated by pneumatic cylinders having stop valves for immobilization of said cylinders, flow regulators and a pressure-multiplying assembly. Cylinders are mounted on said prismatic guide (7) and have linear ruts that allow displacement thereof. The lengths of the rods thereof determine the location of the frame (12) within the three stages (19, 20, 21) of the device.

As far as movement along a vertical axis is concerned, that is, the ascent and descent of the container (2), it is used, as shown for instance in figure 4, two prismatic guides (12) with linear ruts and a rack gear system joined by a rigid axle for maintaining alignment. Movement of the guides (16) is actuated by pneumatic cylinders having stop valves for immobilization of said cylinders, flow regulators and a pressure-multiplying assembly.

The device of the invention includes the use of various security elements, such as, emergency stop elements placed at critical locations, that can only reversed through the control panel, "emergency resetting" push buttons, photoelectric barriers and various signaling devices (warning signs, pilots, etc.).

The operational procedure begins with the entry (19) of the device (1), the container (2) is then gripped by the suction cups (13) of the car (6) frame (12) and next the device (1) is conveyed to the verification area (20) where it is partly or wholly immersed, depending on each particular embodiment, in the tank (5) avoiding the formation of turbulences by the fluid contained in said tank (5); the container (2) is then pressurized by means of an air injector (17) that can be lowered to the mouth of the reservoir (2).

The injector (17) then pneumatically closes the opening of the container (2), the container is next pressurized to a low pressure, approximately between 0,030 to 0,050 bar, thereby control of the time elapsed in said pressurization being ensured. For instance, a delay in reaching the desired pressure may indicate the existence of leakages in the container (2).

The tank (5) includes water recirculation means or recirculation means for any other properly treated liquid so as to facilitate detection of the air bubbles or the gas introduced during the pressurization of the container, which is preferably decalcified water. The tank (5) is provided with filters for eliminating impurities. It is also provided with a tank filling push button and probes for indicating maximum and minimum liquid level.

The chamber (18) is located outside the tank (5), which has at least one transparent wall (22), which is the one corresponding to the chamber (18).

In this embodiment when the container (2) is lowered to the tank (5), and once a liquid stabilization period has gone by, the camera takes a picture, approximately every 500 ms, and analyses it following a predetermined verification program that is stored in the camera (18) memory. Approximately 40 shots are normally made during an interval of 20s.

This test consists of the verification through said pictures of the presence of air bubbles around the container (2) in the water contained in the tank (5). Those containers having said bubbles are discarded as defective. They are also discarded if they do not reach a suitable pressure during the pressurization process.

Upon completion of the watertightness test, containers (2) are lifted and conveyed to a suitable exit (21) along with the containers (2) deemed acceptable, that is those devoid of leakages, or either, along with the imperfect ones, that are conveyed to the area of the assembly line reserved for them. The invention includes the recirculation of said containers and the repetition of the test, said process being usually only performed with the defective containers, so that they are only discarded after undergoing several verifications.

One of the difficulties that the invention has to cope with is discriminating those air bubbles originating from leakages from those air bubbles caused by the upward and downward movement of the containers (2). That is actually achieved, as mentioned above, by providing both the maximum stability to the machine's structure assembly and smoothness to the displacement of the containers (2). This requirement is actually a limitation that is contrary to the rapid movement of the containers.

The analysis of the pictures taken by the video camera is essential for facilitating this job. Actually, the invention permits the detection of air bubbles featuring clear patterns indicating that said bubbles originate from container leakages, it being also capable of detecting air bubbles that due to the size would be undetectable to the human eye.

The machine assembly (1) is under the control of a CPU, which by means of both a touch screen, in said preferred embodiment, and push buttons, permits the interaction of the user's control with the functions of said machine. Said screen is provided with buttons that inform at all times of the operational status of the device and permit alteration of its parameters, stop or activation, initiation of a given process, displacement of the containers, etc.

The machine (1) has memories, a processing and computation unit and it can be parametrized and controlled during its entire operation.

Along the path of the machine there are provided several photoelectric cells for detection that verify the location of the containers, for instance, in the container conveying belts.

## Claims

1. DEVICE FOR THE AUTOMATIZED MONITORING OF LEAKAGE IN PLASTIC CONTAINERS, particularly large-sized containers having a lower valve for discharging the content contained therein, comprising
- a solid structure (3) that is suitably stabilized through leveling and anchoring means (4) to the ground, in accordance with the size and weight of the containers that are to be conveyed in said structure (3), so as to prevent vibrations arising from said conveying movements, there are provided suitable means for conveyance of said containers (2) towards the different areas (19, 20, 21) of the device (1) for lifting and lowering said containers (2) and permitting the smooth introduction and extraction thereof in and out of a tank (5) containing liquid;
- said device (1) having means for pressurizing said containers (2) to a pressure of about 0,030 to 0,050 bar, and means for detecting the pressure in said containers (2);
- said device (1) further comprising at least one video camera (18) having suitable software for determining the presence of air bubbles in said tank (5) around said container (2);
- in that said video camera (18) takes approximately one shot about every 500 ms.
- there being control means of the entire device (1) operation consisting of a control screen and a CPU that houses the logic, computation and data-storing operative units.

2. DEVICE FOR THE AUTOMATIZED MONITORING OF LEAKAGE IN PLASTIC CONTAINERS, according to claim 1, **CHARACTERIZED in that** said means for conveying containers (2) comprise a mobile car (6) that moves along guides (7), said mobile car (6) supporting a frame (12) bearing suction cups (13) provided with a pressure regulator.

3. DEVICE FOR THE AUTOMATIZED MONITORING OF LEAKAGE IN PLASTIC CONTAINERS, according the previous claims, **CHARACTERIZED in that** said tank (5) containing liquid is intended for receiving containers (2) and has at least one transparent wall (22) that is monitored by at least one video camera (18); said camera (18) capturing sequences of images aimed to detect the air bubbles originating from any possible container (2) leakages.

4. DEVICE FOR THE AUTOMATIZED MONITORING OF LEAKAGE IN PLASTIC CONTAINERS, according to the previous claims, **CHARACTERIZED in that** said tank (5) incorporates liquid recirculation means, filters for eliminating impurities, probes for indicating maximum and minimum liquid level and push button/s for filling and emptying said tank (5).

5. DEVICE FOR THE AUTOMATIZED MONITORING OF LEAKAGE IN PLASTIC CONTAINERS, according to the previous claims, **CHARACTERIZED in that** said liquid is decalcified water.

6. DEVICE FOR THE AUTOMATIZED MONITORING OF LEAKAGE IN PLASTIC CONTAINERS, according to the previous claims, **CHARACTERIZED in that** by means of a container pressure controller it is verified the pressurization time elapsed until a predetermined pressure value is reached, there being discarded as defective those containers that fail to reach said predetermined pressure in said predetermined time period.

7. DEVICE FOR THE AUTOMATIZED MONITORING OF LEAKAGE IN PLASTIC CONTAINERS, according to the previous claims, **CHARACTERIZED in that** said video camera (18) takes approximately 40 shots or image-capturing instances in an interval of approximately 20 s.

8. DEVICE FOR THE AUTOMATIZED MONITORING OF LEAKAGE IN PLASTIC CONTAINERS, according to the previous claims, **CHARACTERIZED in that** said containers (2) are conveyed to and exit area (21) in accordance with the analysis made by the invention: acceptable containers or containers with leakages.

9. DEVICE FOR THE AUTOMATIZED MONITORING OF LEAKAGE IN PLASTIC CONTAINERS, according to the previous claims, **CHARACTERIZED in that** said containers (2) that have undergone verification can be re-circulated on to a new watertightness verification.

10. DEVICE FOR THE AUTOMATIZED MONITORING OF LEAKAGE IN PLASTIC CONTAINERS, according to the previous claims, **CHARACTERIZED in that** it is provided with electronic barriers, security and emergency push buttons as well as combined function activation push buttons.

11. DEVICE FOR THE AUTOMATIZED MONITORING OF LEAKAGE IN PLASTIC CONTAINERS, according to the previous claims, **CHARACTERIZED in that** the pneumatic equipment includes security pressure switches and bistable electrovalves provided with standing closed centers.

12. METHOD FOR THE AUTOMATIZED MONITORING OF LEAKAGE IN PLASTIC CONTAINERS, particularly in large-sized containers having a lower valve for discharging the content contained therein, said discharge being carried out by the device of claim 1, wherein
1.-said method is based on a solid structure (3) that is suitably anchored to the ground for preventing vibrations originating from the movement of the containers (2) to be verified in accordance with the size and weight of same
2.-by means of suitable means said container (2) is conveyed from the entry channel (19) in said device (1) towards a verification area (20)
3.-said container (2) is air-pressurized to an approximate pressure of about 0,030 to 0,050 bar
4.-should said pressure not be reached the container (2) would be deemed defective and treated as such
5.-said container (2) is smoothly introduced into a tank (5) containing liquid thereby the creation of turbulences in the liquid contained in said immersion tank (5) being prevented.
6.-by means of at least one video camera (18) it is detected through image detection software the presence inside said tank (5) of bubbles that might escape from said container through one or several leakage points, said bubbles being in a number and size such that discarding any possible water turbulences is permitted; the bottom of said tank (5) being suitable lighted for facilitation detection by said video camera/s, which takes approximately one shot in every 500 ms, of any possible air bubbles
7.-after a predetermined amount of time said containers (2) are smoothly removed from said tank (5) thereby formation of turbulence being avoided, said containers (2) being subsequently conveyed to the suitable exit channel (21) in accordance with the result of the verification test: defective containers or containers without leakages.

## Patentansprüche

1. VORRICHTUNG ZUR AUTOMATISIERTEN ÜBERWACHUNG VON UNDICHTEN STELLEN IN KUNSTSTOFFBEHÄLTERN, besonders großformatige Behälter mit einem unteren Ventil zum Entleeren des darin enthaltenen Inhalts, bestehend aus
- einer festen Struktur (3), die durch Nivellier- und Verankerungselemente (4) am Boden entsprechend der Größe und des Gewichtes der in der genannten Struktur (3) zu fördernden Behälter angemessen stabilisiert ist, um Vibrationen zu verhindern, die duch die gennante Förderbewegungen entstehen, wobei geeignete Mittel zum Fördern der genannten Behälter (2) in die verschiedenen Bereiche (19, 20, 21) der Vorrichtung (1) zum Anheben und Absenken der genannten Behälter (2) vorgesehen sind, die ein sanftes Ein- und Ausfahren in einen Tank (5) ermöglichen, der Flüssigkeit enthält;
- die genannte Vorrichtung (1) hat Mittel zum Beaufschlagen der genannten Behälter (2) mit einem Druck von etwa 0,030 bis 0,050 bar und Mittel zum Erfassen des Drucks in den genannten Behältern (2);
- die genannte Vorrichtung (1) umfasst ferner mindestens eine Videokamera (18) mit geeigneter Software zur Erkennung von Luftblasen im genanntem Tank (5) der den genannten Behälter (2) einschliesst;
- die genannte Videokamera (18) macht ungefähr alle 500 ms eine Aufnahme.
- es gibt Steuerungseinrichtungen für den gesamten Betrieb der Vorrichtung (1), bestehend aus einem Kontrollbildschirm und einer CPU, die die logischen, berechnenden und datenspeichernden Betriebseinheiten enthält.

2. VORRICHTUNG ZUR AUTOMATISIERTEN ÜBERWACHUNG VON UNDICHTEN STELLEN IN KUNSTSTOFFBEHÄLTERN, laut Anspruch 1, **DADURCH GEKENNZEICHNET, dass** die genannten Fördermittel der Behälter (2) einen mobilen Wagen (6) beinhalten, der sich auf Führungen bewegt (7), wobei der genannte mobile Wagen (6) einen Rahmen trägt (12) Saugnäpfe beinhaltet (13) und mit einem Druckregler versehen ist.

3. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüchen, **DADURCH GEKENNZEICHNET, dass** der genannte Tank (5), der Flüssigkeit enthält, zur Aufnahme von Behältern (2) bestimmt ist und mindestens eine transparente Wand (22) aufweist, die von mindestens einer Videokamera (18) überwacht wird; wobei die genannte Kamera (18) Bildsequenzen erfasst, deren Ziel die Erkennung von Luftblasen ist, die von eventuellen Undichtigkeiten des Behälters (2) stammen.

4. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüchen, **DADURCH GEKENNZEICHNET, dass** der Tank (5) Mittel zur Flüssigkeitsrückführung, Filter zur Beseitigung von Verunreinigungen, Sonden zur Anzeige des maximalen und minimalen Füllstands und Drucktaster zum Befüllen und Entleeren des Tanks (5) beinhaltet.

5. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüchen, **DADURCH GEKENNZEICHNET, dass** die Flüssigkeit entkalktes Wasser ist.

6. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüchen, **DADURCH GEKENNZEICHNET, dass** Mittels einer Behälterdrucksteuerung die verstrichene Druckbeaufschlagungszeit bis zum erreichen eines vorbestimmten Druckwertes überprüft wird, wobei die Behälter, die den vorbestimmten Druck in den vorbestimmten Zeitspanne nicht erreichen, als defekt ausgeschleust werden.

7. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüchen, **DADURCH GEKENNZEICHNET, dass** die genannte Videokamera (18) ungefähr 40 Aufnahmen oder Bilderfassungsinstanzen in einem Intewall von ungefähr 40 Aufnahmen oder Bilderfassungsinstanzen in einem Interwall von ungefähr 20 s macht.

8. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüche, **DADURCH GEKENNZEICHNET, dass** die genannten Behälter (2) gemäß der Analyse der Erfindung in einem Auslaufbereich (21) befördert werden: akzeptable Behälter oder Behälter mit undichten Stellen.

9. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüche, **DADURCH GEKENNZEICHNET, dass** die genannten Behälter (2), die die Überprüfung durchlaufen haben, in eine erneute Dichtheitsprüfung zurückgeführt werden können.

10. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüche, **DADURCH GEKENNZEICHNET, dass** sie mit elektronischen Schranken, Sicherheits- und Notfalltastern, sowie kombinierten Funktionstastern ausgestattet ist.

11. VORRICHTUNG ZUR AUTOMATISIERTEN ÜBERWACHUNG VON UNDICHTEN STELLEN IN KUNSTSTOFFBEHÄLTERN, gemäß den vorhergehenden Ansprüche, **DADURCH GEKENNZEICHNET, dass** die pneumatische Ausrüstung Sicherheitsdruckschalter und bistabile Elektroventile mit stehenden, geschlossenen Zentren beinhaltet.

12. VORRICHTUNG ZUR AUTOMATISIERTEN ÜBERWACHUNG VON UNDICHTEN STELLEN IN KUNSTSTOFFBEHÄLTERN, insbesondere bei großformatigen Behältern mit einem unteren Ventil zum Entleeren des darin enthaltenen Inhalts. Diese Entleerung wird durch die Vorrichtung aus Anspruch 1 durchgeführt, wobei
1. die gennante Methode auf einer festen Struktur (3) basiert, die entsprechend am Boden verankert ist, um Vibrationen zu vermeiden, die durch die Bewegung der auf Größe und Gewicht zu prüfenden Behälter (2) entstehen.
2. der genannte Behälter (2) wird mit geeigneten Mitteln vom Einfaufkanal (19) in die genannte Vorrichtung (1) in einen Prüfbereich (20) gefördert.
3. der gennante Behälter (2) wird mit Druckluft beaufschlagt, auf einen ungefähren Druck von etwa 0,030 bis 0,050 bar.
4. wenn der Druck nicht erreicht wird, gilt der Behälter (2) als defekt und wird als solcher behandelt.
5. der gennante Behälter (2) wird sanft in einen Tank (5) mit Flüssigkeit eingetaucht, so dass die Erzeugung von Turbulenzen in der Flüssigkeit des Tauchbades (5) vermieden wird.
6. anhand mindestens einer Videokamera (18) wird durch eine Bilderkennungssoftware das Vorhandensein von Blasen, die durch eine oder mehrere undichte Stellen aus dem Behälter entweichen könnten, im Inneren des Tanks (5) erfasst, wobei die Anzahl und Größe der Blasen mögliche Wasserturbulenzen ausschliessen lässt; der Boden des gennanten Tanks (5) ist entsprechend beleuchtet, wodurch die Erkennung durch die gennante/n Videokamera/s erleichtert wird die alle 500 ms etwa eine Aufnahme von möglichen Luftblasen macht.
7. nach einer vorbestimmten Zeitspanne werden die genannten Behälter (2) sanft aus dem genannten Tank (5) herausgeholt, wodurch Turbulenzbildung vermieden wird, die genannten Behälter (2) werden anschließend in den passenden Auslaufkanal (21) gefördert, laut Ergebnis der Virifizierungsprüfung: defekte Behälter oder Behälter ohne undichte Stellen.

## Revendications

1. STRUCTURE DESTINÉE A LA DÉTECTION AUTOMATISÉE DE FUITES DANS DES CONTENEURS EN PLASTIQUE, en particulier dans des conteneurs de grandes dimensions munis d'une vanne inférieure permettant l'évacuation de leur contenu, qui comprend:
- Une structure solide (3) qui est correctement stabilisée à l'aide de moyens de nivellement et de fixation au sol (4) adaptés en fonction de la dimension et du poids des conteneurs qui doivent être déplacés dans cette structure (3) de sorte à prévenir les vibrations provoquées par ces mouvements de transport, sachant qu'il existe des moyens adéquats pour déplacer ces conteneurs (2) vers les différentes zones (19, 20, 21) de la structure (1) afin de lever et d'abaisser lesdits conteneurs (2) et de permettre leur introduction et leur extraction en douceur dans et hors d'une cuve (5) contenant un liquide;
- cette structure (1) dispose de moyens pour mettre lesdits conteneurs (2) sous une pression d'environ 0,030 - 0,050 bar, et de moyens pour détecter la pression dans ces conteneurs (2);
- ladite structure (1) comprend également au moins une caméra vidéo (18) munie d'un logiciel adéquat permettant de déterminer la présence de bulles d'air dans ladite cuve (5) autour dudit conteneur (2) ;
- cette caméra vidéo (18) prend une photo environ toutes les 500 ms;
- il existe des moyens de contrôle du fonctionnement global de la structure (1) qui consiste en un écran de contrôle et une CPU qui abrite les unités opérationnelles de logique, de calcul et d'enregistrement des données.

2. STRUCTURE DESTINÉE À LA DÉTECTION AUTOMATISÉE DE FUITES DANS DES CONTENEURS EN PLASTIQUE, conformément à la revendication 1, **CARACTERISÉE en ce que** lesdits moyens pour transporter les conteneurs (2) comprennent un chariot mobile (6) qui se déplace le long de guides (7) et qui soutient un cadre (12) équipé de ventouses (13) et muni d'un régulateur de pression.

3. STRUCTURE DESTINÉE À LA DÉTECTION AUTOMATISÉE DE FUITES DANS DES CONTENEURS EN PLASTIQUE, conformément aux revendications précédentes, **CARACTÉRISÉE en ce que** la dite cuve (5) contenant un liquide a été conçue pour recevoir des conteneurs (2) et possède au moins une paroi (22) transparente qui est surveillée par au moins une caméra vidéo (18), laquelle prend des séquences d'images afin de détecter les bulles d'air qui proviendraient d'une fuite éventuelle dans les conteneurs (2).

4. STRUCTURE DESTINÉE À LA DÉTECTION AUTOMATISÉE DE FUITES DANS DES CONTENEURS EN PLASTIQUE, conformément aux revendications précédentes, **CARACTÉRISÉE en ce que** cette cuve (5) est équipée de moyens de recirculation du liquide, de filtres pour éliminer les impuretés, de sondes indiquant les niveaux maximum et minimum de liquide et de boutons assurant le remplissage et la vidange de la cuve (5).

5. STRUCTURE DESTINÉE À LA DÉTECTION AUTOMATISÉE DE FUITES DANS DES CONTENEURS EN PLASTIQUE, conformément aux revendications précédentes, **CARACTERISÉE en ce que** ledit liquide est de l'eau décalcifiée.

6. STRUCTURE DESTINÉE À LA DÉTECTION AUTOMATISÉE DE FUITES DANS DES CONTENEURS EN PLASTIQUE, conformément aux revendications précédentes, **CARACTÉRISÉE en ce qu'**un régulateur de pression permet de vérifier le temps de pressurisation écoulé jusqu'à ce qu'une valeur prédéterminée de pression soit atteinte, ce qui permet de rejeter comme défectueux les conteneurs qui ne parviennent pas à atteindre la pression prédéterminée dans le délai prédéterminé.

7. STRUCTURE DESTINÉE À LA DÉTECTION AUTOMATISÉE DE FUITES DANS DES CONTENEURS EN PLASTIQUE, conformément aux revendications précédentes, **CARACTÉRISÉE en ce que** ladite caméra vidéo (18) prend environ 40 photos ou images dans un intervalle d'environ 20 s.

8. STRUCTURE DESTINÉE À LA DÉTECTION AUTOMATISÉE DE FUITES DANS DES CONTENEURS EN PLASTIQUE, conformément aux revendications précédentes, **CARACTÉRISÉE en ce que** lesdits conteneurs (2) sont amenés à la zone de sortie (21) puis l'abandonnent en fonction de l'analyse faite par l'invention: conteneurs acceptables ou conteneurs présentant des fuites.

9. STRUCTURE DESTINÉE À LA DÉTECTION AUTOMATISÉE DE FUITES DANS DES CONTENEURS EN PLASTIQUE, conformément aux revendications précédentes, **CARACTÉRISÉE en ce que** lesdits conteneurs (2) qui ont été soumis à une vérification peuvent être remis en circulation et être soumis à une nouvelle vérification d'étanchéité.

10. STRUCTURE POUR LA DÉTECTION AUTOMATISÉE DE FUITES DANS DES CONTENEURS EN PLASTIQUE, conformément aux revendications précédentes, **CARACTERISÉE en ce qu'**elle est munie de barrières électroniques, de boutons de sécurité et d'urgence ainsi que de boutons d'activation à fonctions combinées.

11. STRUCTURE DESTINÉE À LA DÉTECTION AUTOMATISÉE DE FUITES DANS DES CONTENEURS EN PLASTIQUE, conformément aux revendications précédentes, **CARACTERISÉE en ce que** l'équipement pneumatique inclut des capteurs de pression de sécurité et des électrovannes bistables à centres fermés droits.

12. MÉTHODE DESTINÉE À LA DÉTECTION AUTOMATISÉE DE FUITES DANS DES CONTENEURS EN PLASTIQUE, en particulier dans des conteneurs de grandes dimensions munis d'une vanne inférieure permettant l'évacuation de leur contenu, évacuation qui est réalisée par la structure de la revendication 1 sachant que :
1. Ladite méthode se fonde sur une structure solide (3) qui est correctement fixée au sol en fonction de leur dimension et de leur poids afin de prévenir les vibrations causées par le mouvement des conteneurs (2) soumis à vérification.
2. Des moyens adéquats déplacent ledit conteneur (2) du canal d'entrée (19) dans ladite structure (1) vers une zone de vérification (20) .
3. Ledit conteneur (2) est pressurisé à une pression d'environ 0,030 à 0,050 bar.
4. Si cette pression n'est pas atteinte, le conteneur (2) sera considéré défectueux et traité en conséquence.
5. Ledit conteneur (2) est introduit doucement dans une cuve (5) contenant un liquide afin d'éviter la création de turbulences dans le liquide contenu dans cette cuve (5) d'immersion.
6. Au moins une caméra vidéo (18) permet de détecter, à l'aide d'un logiciel de détection d'images, la présence à l'intérieur de cette cuve (5) de bulles qui pourraient s'échapper de la cuve à travers un ou plusieurs points de fuite et dont le nombre et la dimension permettront d'écarter toutes turbulences éventuelles de l'eau ; le fond de cette cuve (5) sera correctement éclairé de sorte à faciliter la détection des bulles d'air éventuelles par cette ou ces caméras vidéo qui prendront une photo toutes les 500 ms.
7. Après une durée prédéterminée, ces conteneurs (2) sont retirés en douceur afin d'éviter la formation de turbulences, puis sont déplacés vers le canal de sortie (21) approprié en fonction du résultat du test de vérification : conteneurs défectueux ou conteneurs ne présentant pas de fuites.
